# EUROPEAN PATENT APPLICATION

(11) **EP 4 516 704 A1**
(43) Date of publication of application: **05.03.2025**
(21) Application number: 23795993.7
(22) Date of filing: 28.03.2023
(51) Int. Cl.: B65G 47/14, B65G 47/248, B65G 47/53

(54) **EGG TRANSFER DEVICE**

(30) Priority: 25.04.2022 JP 2022071223; 01.08.2022 JP 2022123023
(71) Applicant: Nabel Co., Ltd., Kyoto-shi, Kyoto 601-8444 (JP)
(72) Inventor: NAMBU, Takahiko, Kyoto-shi, Kyoto 601-8444 (JP); YOKOSE, Kuniyuki, Kyoto-shi, Kyoto 601-8444 (JP)
(74) Representative: Müller Hoffmann & Partner
(86) International application number: PCT/JP2023/012675
(87) International publication number: WO 2023/210246

(57) **Abstract**

An object of the present invention is to provide an egg transfer device with improved processing capability while suppressing the speed of a distribution conveyor to a low speed, and in a device 1 that transfers eggs E from a multi-row supply conveyor 3 that conveys, in an X direction, a plurality of eggs E in which long axes connecting sharp ends and blunt ends of the eggs E are arranged at a first pitch P1 along a Y direction to a single-row distribution conveyor 4 that conveys, in the Y direction, the eggs E in which the long axes are arranged along the Z direction at a second pitch P2, in which when transferring the plurality of eggs E to the distribution conveyor 4, the device 1 is configured to transfer the eggs E to the distribution conveyor 4 at different transfer timings.

## Description

### Technical Field

The present invention relates to an egg transfer device.

### Background Art

A conveying device is known which includes a multi-row supply conveyor and a single-row distribution conveyor provided in a direction orthogonal to a conveying direction of the supply conveyor at a conveying end of the supply conveyor, and transfers eggs to buckets provided on the distribution conveyor at the conveying end of the supply conveyor.

In recent years, a conveying device for an egg has been required to have improved processing capability. In order to improve processing capability, the overall speed is increased. For example, in the case of six rows of a supply conveyor, the conveyance speed of the single-row distribution conveyor needs to be much faster than the conveyance speed of the supply conveyor (about six times in simple calculation), but in the case of increasing the conveyance speed of the distribution conveyor, the impact applied to the egg increases, and there is an increased risk that the egg is easily broken. Therefore, it is necessary to suppress the speed of the distribution conveyor to a low speed in order to prevent the impact from increasing.

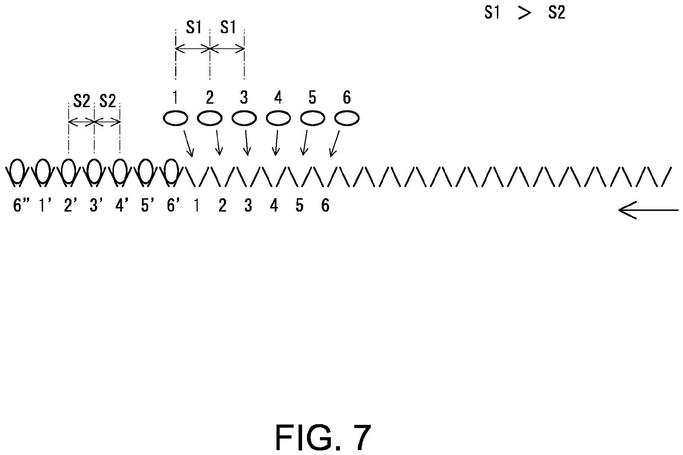

Therefore, conventionally, as illustrated in FIG. 7, attempts have been made to reduce the speed by reducing the pitch between the buckets on the distribution conveyor as compared to the pitch of the egg arrangement on the supply conveyor. That is, in the conventional egg transfer device, all the eggs are simultaneously transferred from the supply conveyor to the distribution conveyor by changing the attachment angle between a crank drive shaft and a crank. With this configuration, in the conventional egg transfer device, the relationship between the egg arrangement pitch S1 on the supply conveyor and the egg arrangement pitch S2 on the distribution conveyor is set to "S1 > S2".

For example, page (2) of Japanese Patent Publication No. 53-8423 (Patent Literature 1) and paragraph 0026 of Japanese Patent Application Laid-Open No. 9-12135 (Patent Literature 2) each describe a distribution conveyor in which the pitch between buckets is reduced.

### Citation List

### Patent Literatures

Patent Literature 1: JP 53-8423 A
Patent Literature 2: JP 9-12135 A

### Summary of Invention

### Technical Problem

However, in the conventional technique, a plurality of rows of eggs are simultaneously loaded into buckets (see, for example, Patent Literature 1, page (5)). Therefore, when the reduction width of the pitch between the buckets is increased, the egg release angle of the transfer device becomes too large, and there is a limit that transfer cannot be performed. Therefore, there is also a limit in suppressing the speed of the distribution conveyor to a low speed.

An object of the present invention is to provide an egg transfer device with improved processing capability while suppressing the speed of a distribution conveyor to a low speed. Solution to Problem

An egg transfer device of the present invention is a device that transfers eggs from a multi-row supply conveyor that conveys, in an X direction, a plurality of eggs in which long axes connecting sharp ends and blunt ends of the eggs are arranged at a first pitch **P1** along a Y direction to a single-row distribution conveyor that conveys, in the Y direction, the eggs in which the long axes are arranged along the Z direction at a second pitch P2 along the Y direction, in which when transferring the plurality of eggs to the distribution conveyor, the egg transfer device is configured to transfer the eggs to the distribution conveyor at different transfer timings. Advantageous Effects of Invention

According to the present invention, it is possible to improve the processing capacity while suppressing the speed of the distribution conveyor to a low speed.

The above and other objects, features, aspects, and advantages of the present invention will become apparent from the following detailed description of the present invention understood in conjunction with the accompanying drawings.

### Brief Description of Drawings

FIG. 1 is a plan view schematically illustrating a conveying device for an egg including an egg transfer device of a first embodiment.
FIG. 2 is a front view of the egg transfer device of the first embodiment.
FIG. 3 is a front view illustrating egg receiving postures of acceleration trays in the egg transfer device of the first embodiment.
FIG. 4 is a front view illustrating egg release postures of the acceleration trays in the egg transfer device of the first embodiment.
FIG. 5 is a rear view of the egg transfer device of the first embodiment.
FIG. 6 is an operation explanatory diagram illustrating egg release timings from the acceleration trays to buckets over time in the first embodiment.
FIG. 7 is an explanatory view in a case where an egg release pitch of the conventional technique is narrowed.
FIG. 8 is a plan view schematically illustrating a conveying device for an egg including an egg transfer device of a second embodiment.
FIG. 9 is a partially enlarged side view of the conveying device illustrated in FIG. 8.
FIG. 10 is a front view of the egg transfer device of the second embodiment.
FIG. 11 is a rear view of the egg transfer device of the second embodiment.
FIG. 12 is a front view illustrating egg receiving postures of acceleration trays in a group.
FIG. 13 is a front view illustrating egg release postures of the acceleration trays in the group.
FIG. 14 is an operation explanatory diagram illustrating egg release timings from each group from acceleration trays to a distribution conveyor over time in the second embodiment.
FIG. 15 is an explanatory view in a case where an egg release pitch and the pitch in the distribution conveyor in the conventional technique are the same.
FIG. 16 is an explanatory view in a case where the egg release pitch of the conventional technique is narrowed.
FIG. 17 is an explanatory diagram that is difficult to implement when an attempt is made to improve the conventional technique.
FIG. 18 is an explanatory diagram in which a new problem has occurred when further improvement of the conventional technique is attempted.

### Description of Embodiments

### <First Embodiment>

Hereinafter, an egg transfer device according to a first embodiment of the present invention will be described with reference to the drawings.

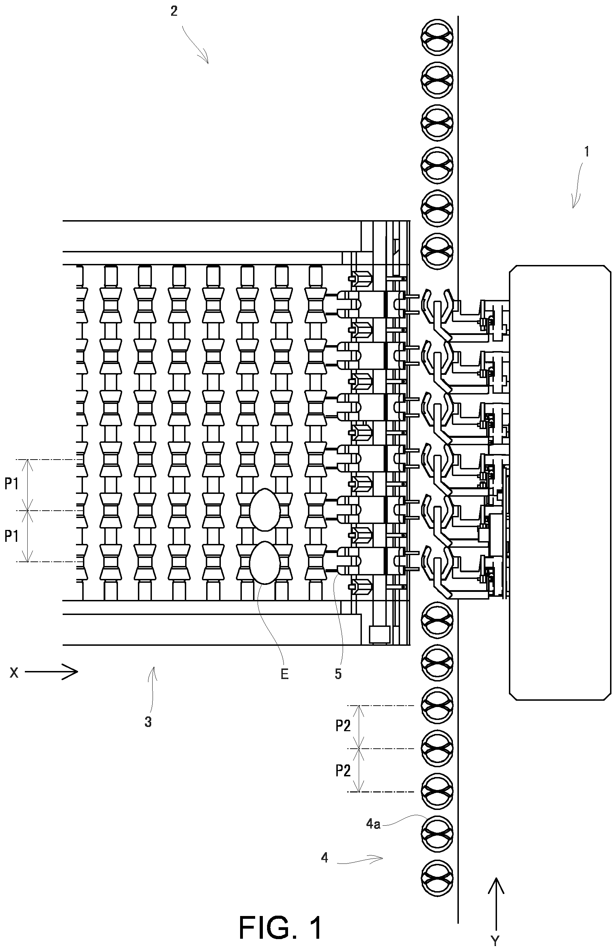

FIG. 1 is a plan view schematically illustrating a conveying device 2 for an egg E including an egg transfer device 1 according to the present invention.

The conveying device 2 for an egg includes a supply conveyor 3 having a plurality of rows in the Y direction with the X direction as a conveying direction for an egg, a distribution conveyor 4 that conveys eggs in a single row in the Y direction, and an egg transfer device 1 provided between the two conveyors. A packaging device (not illustrated) for packaging the conveyed eggs is connected to the downstream side of the distribution conveyor 4 in the conveying direction Y.

The supply conveyor 3 is a multi-row conveyor that conveys, in the X direction, a plurality of eggs E in which long axes connecting sharp ends and blunt ends of the eggs E are arranged at a first pitch P1 along the Y direction.

In the present embodiment, the supply conveyor 3 is exemplified as a multi-row conveyor including six rows that conveys six eggs E in such a manner that the long axes thereof are aligned in the same direction and at the first pitch P1. Here, the first pitch P1 is 76.2 mm.

A weighing device (not illustrated) is provided at the conveyance end portion of the supply conveyor 3. The weighing device measures the weight of the eggs E. An impeller 5 is provided above the weighing device. After weighing, the eggs E are pushed out from the supply conveyor 3 and moved to the egg transfer device 1 by the rotation of the impeller 5. The rotation speed of the impeller 5 is interlocked with the conveyance speed of the supply conveyor 3.

The distribution conveyor 4 is a single-row conveyor that conveys, along the Y direction, the eggs E in which long axes of the eggs E are arranged along the Z direction (vertical direction). In the present embodiment, the distribution conveyor 4 is composed of an endless chain.

Buckets 4a are provided in a single row at a second pitch P2 on the distribution conveyor 4 and are configured to open upward to receive the eggs E from above. The distribution conveyor 4 is configured to discharge for each size in the packaging device provided on the conveyance downstream side thereof. In the present embodiment, the second pitch P2 is 63.5 mm.

The egg transfer device 1 according to the present embodiment is a device that is provided between the supply conveyor 3 and the distribution conveyor 4 and transfers a plurality of rows of eggs E supplied from the supply conveyor 3 to a single-row distribution conveyor 4.

When transferring the plurality of eggs E to the distribution conveyor 4, the egg transfer device 1 is configured to transfer the eggs E to the buckets 4a of the distribution conveyor 4 at different transfer timings. In the following drawings, details of the endless chain constituting the distribution conveyor 4 are not illustrated.

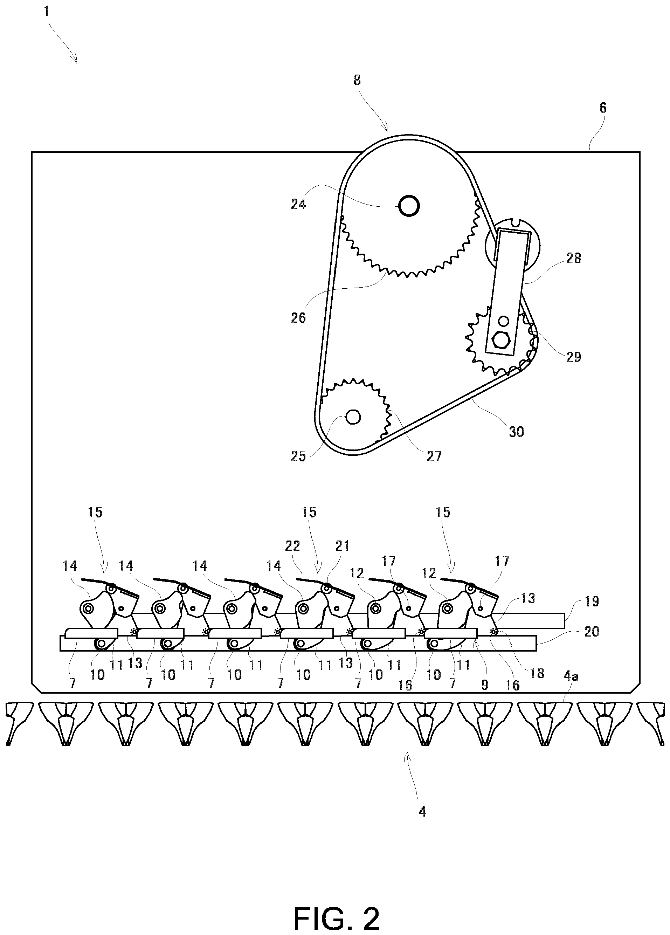

As illustrated in FIG. 2, the egg transfer device 1 includes a machine frame 6, acceleration trays 7, and drive systems 8 that each drive the acceleration tray 7.

A plurality of the acceleration trays 7 are provided on the front side of the machine frame 6 in accordance with the number of rows provided in the supply conveyor 3. The acceleration trays 7 are arranged at intervals of a pitch P1=76.2 and are arranged on the same line in the Y-axis direction.

Each of the plurality of acceleration trays 7 is provided with an acceleration mechanism 9 that accelerates the acceleration tray 7. The acceleration mechanism 9 includes an acceleration tray drive shaft 10, a first crank arm 11, a bracket 13, a cam 14, and an egg pressing member 15.

The acceleration tray drive shaft 10 is rotatably provided in the machine frame 6. One end of the first crank arm 11 is fixed to an end portion of the acceleration tray drive shaft 10. The plurality of first crank arms 11 are each fixed to the end portion of the acceleration tray drive shaft 10 at different angles. A first pivot shaft 12 is fixed to the other end of the first crank arm 11.

A bracket 13 to which the acceleration tray 7 is attached is rotatably provided on the first pivot shaft 12, and a cam 14 is fixed to an end portion thereof.

Since the plurality of first crank arms 11 are provided at different angles with respect to the acceleration tray drive shafts 10, when the first crank arms 11 rotate by the rotation of the acceleration tray drive shafts 10, the plurality of brackets 13 provided on the first pivot shafts 12 of the first crank arms 11 rotate at different phases.

The plurality of first crank arms 11 are provided at different radii. Therefore, in the egg receiving states of the acceleration trays 7, the horizontal positions of the first pivot shafts 12 of the first crank arms 11 coincide with each other although the first crank arms 11 are provided at different angles with respect to the acceleration tray drive shafts 10.

The bracket 13 is provided with the acceleration tray 7, a second pivot shaft 16, and a third pivot shaft 17. The acceleration tray 7 is provided on the bracket 13 so as to protrude toward the supply conveyor.

The second pivot shaft 16 is provided on the bracket 13 so as to protrude toward the machine frame 6. A roller 18 is rotatably provided on the second pivot shaft 16. The roller 18 is fitted in a gap between an upper rail 19 and a lower rail 20 provided in the machine frame 6, and can reciprocate along the Y direction.

The third pivot shaft 17 is provided on the bracket 13 so as to protrude toward the supply conveyor 3. The egg pressing member 15 is rotatably supported by the third pivot shaft 17 in a rotatable manner. The egg pressing member 15 includes a cam follower 21 and an egg pressing blade 22.

A biasing means (not illustrated) is provided between the bracket 13 and the egg pressing member 15 so that the cam follower 21 comes into contact with the cam 14. The biasing means is configured by, for example, a tension spring. When the cam 14 rotates, the cam follower 21 moves according to the shape of the cam 14, so that the egg pressing member 15 also moves according to the shape of the cam 14.

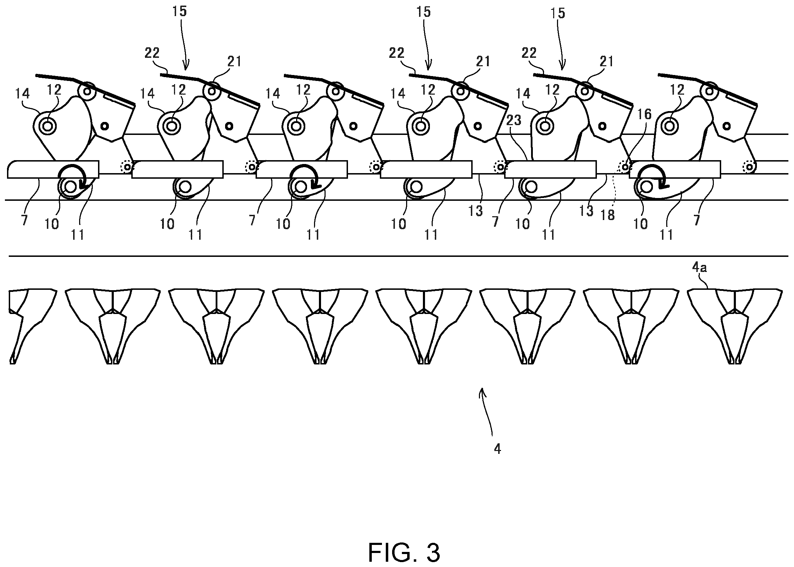

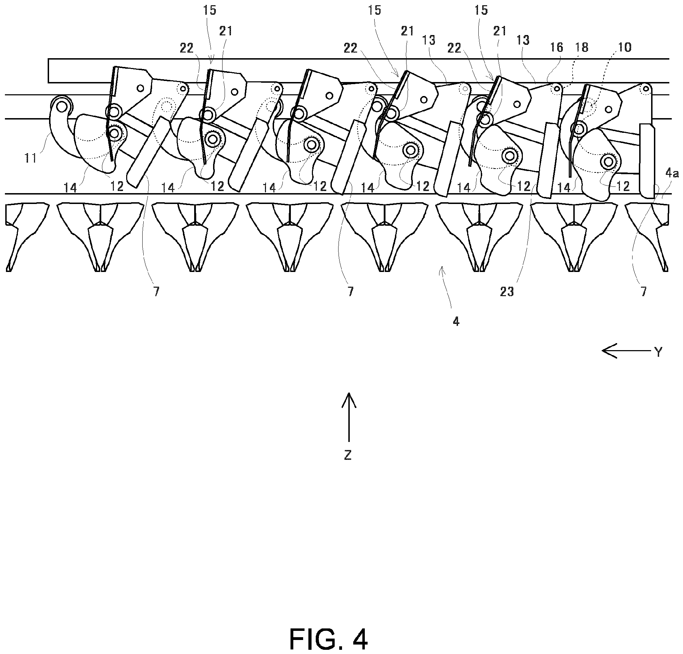

FIGS. 3 and 4 are views illustrating postures of the acceleration trays 7. FIG. 3 illustrates an egg receiving state, and FIG. 4 illustrates an egg releasing state. The operation of the acceleration tray 7 will be described below.

The roller 18 of the second pivot shaft 16 reciprocates in the horizontal direction (Y direction) at a position above the acceleration tray drive shaft 10. When the acceleration tray drive shaft 10 rotates in the arrow direction, the first crank arm 11 rotates, and the bracket 13 pivotally supported by the first pivot shaft 12 fixed to the first crank arm 11 swings about the second pivot shaft 16. When the bracket 13 swings, a placement surface 23 of the acceleration tray 7 fixed to the bracket 13 changes its position from an egg receiving state position above the acceleration tray drive shaft 10 to a lower egg releasing state position.

As illustrated in FIG. 3, in the egg receiving state, the acceleration tray 7 is in a standby state substantially above the acceleration tray drive shaft 10 with the placement surface 23 for receiving the egg E facing upward. The egg pressing blade 22 of the egg pressing member 15 is held in an egg receiving state above the acceleration tray 7 by the cam 14. In this state, the egg E is transferred onto the placement surface 23 of the acceleration tray 7.

Thereafter, when the acceleration tray drive shaft 10 rotates in the arrow direction, the bracket 13 pivotally supported by the first pivot shaft 12 of the first crank arm 11 moves along with the horizontal movement of the second pivot shaft 16 to change the posture of the acceleration tray 7. At this time, the egg pressing blade 22 presses the egg E against the placement surface 23 of the acceleration tray 7 by a biasing means.

As illustrated in FIG. 4, when the acceleration tray drive shaft 10 further rotates, the acceleration tray 7 is rotated so that the long axis of the egg E faces the Z-axis direction. Then, the acceleration tray 7 is accelerated in the Y direction to release the egg to the distribution conveyor 4. At this time, the egg pressing blade 22 releases the pressing of the egg E against the biasing means by the cam 14, and the egg E is released to the bucket 4a of the distribution conveyor 4 below the acceleration tray 7. After the egg E is released, the placement surface 23 of the acceleration tray 7 returns from the state illustrated in FIG. 4 to the state illustrated in FIG. 3 by the rotation of the acceleration tray drive shaft 10. By repeating the above, the egg transfer operation can be continued.

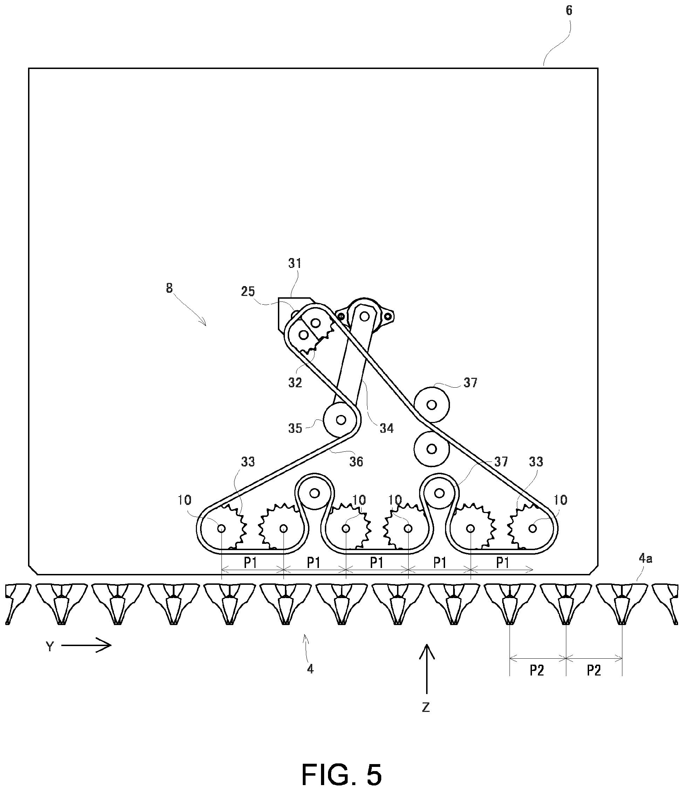

Next, the drive system 8 of the acceleration tray 7 will be described with reference to FIGS. 2 and 5. The drive systems 8 are provided on the front side and the back side of the machine frame 6, and each drive the acceleration mechanism 9.

As illustrated in FIG. 2, a main drive shaft 24 and a sub-drive shaft 25 are rotatably provided on the front side of the machine frame 6.

The main drive shaft 24 is driven in synchronization with the conveyance speed of the distribution conveyor 4. The main drive shaft 24 is provided with a main sprocket 26, and the sub-drive shaft 25 is provided with a sub-sprocket 27. The machine frame 6 is provided with a front-side tension sprocket 29 at an end portion of a swingable front-side swing arm 28. The front-side swing arm 28 is provided with a biasing means (not illustrated) that absorbs looseness of the main chain 30. The main chain 30 is looped between the main sprocket 26, the sub-sprocket 27, and the front-side tension sprocket 29. Therefore, when the main drive shaft 24 is driven, the sub-drive shaft 25 is driven by the main chain 30. The other end of the sub-drive shaft 25 protrudes toward the back side of the machine frame 6.

As illustrated in FIG. 5, the sub-drive shaft 25 and the acceleration tray drive shaft 10 are rotatably provided on the back side of the machine frame 6.

A second crank arm 31 is fixed to the end portion of the sub-drive shaft 25 protruding from the front side to the back side of the machine frame 6. The second crank arm 31 is provided with a dual sprocket 32. The dual sprocket 32 functions as an eccentric sprocket. An acceleration tray sprocket 33 is fixed to one end of the acceleration tray drive shaft 10.

On the back side of the machine frame 6, the dual sprocket 32 of the second crank arm 31 fixed to the sub-drive shaft 25, a back-side swing arm 34, and a plurality of acceleration tray sprockets 33 fixed to the plurality of acceleration tray drive shafts 10 are provided.

A sub-chain 36 is looped between the dual sprocket 32 and the plurality of acceleration tray sprockets 33. The sub-chain 36 is also looped around a plurality of idling sprockets 37 provided in the machine frame 6. Further, the sub-chain 36 is also looped around a back-side tension sprocket 35 provided at an end portion of the swingable back-side swing arm 34, and looseness of the sub-chain 36 is absorbed.

When the sub-drive shaft 25 rotates, the dual sprocket 32 and the acceleration tray sprockets 33 rotate.

Here, since the dual sprocket 32 functions as an eccentric sprocket, the sub-chain 36 looped around the dual sprocket 32 is pulled, and the traveling speed thereof is accelerated when the sub-chain 36 moves away from the axial center of the sub-drive shaft 25 and is decelerated when the sub-chain 36 moves closer.

Therefore, the rotation speed of the acceleration tray sprocket 33 driven by the sub-chain 36 repeats acceleration and deceleration.

The operation timings of the plurality of acceleration trays 7 can be individually shifted.

This timing shift is achieved by providing a phase difference in the angle of each of the first crank arms 11 as illustrated in FIG. 3.

Furthermore, the timings of the operations of the plurality of egg pressing members 15 can be individually shifted.

This timing shift is caused by the timing at which the egg pressing member 15 is in the open state and the time during which the open state is maintained being individually set for each of the egg pressing members 15. These setting differences are achieved by making the shapes of the cams 14 different from each other.

Further, each of the acceleration trays 7 can have the same horizontal position in the egg receiving state although the phase difference is provided in the angles of the first crank arms 11. This is achieved by setting the radius of each of the first crank arms 11 to be different from each other in correlation with the angle of the first crank arm 11.

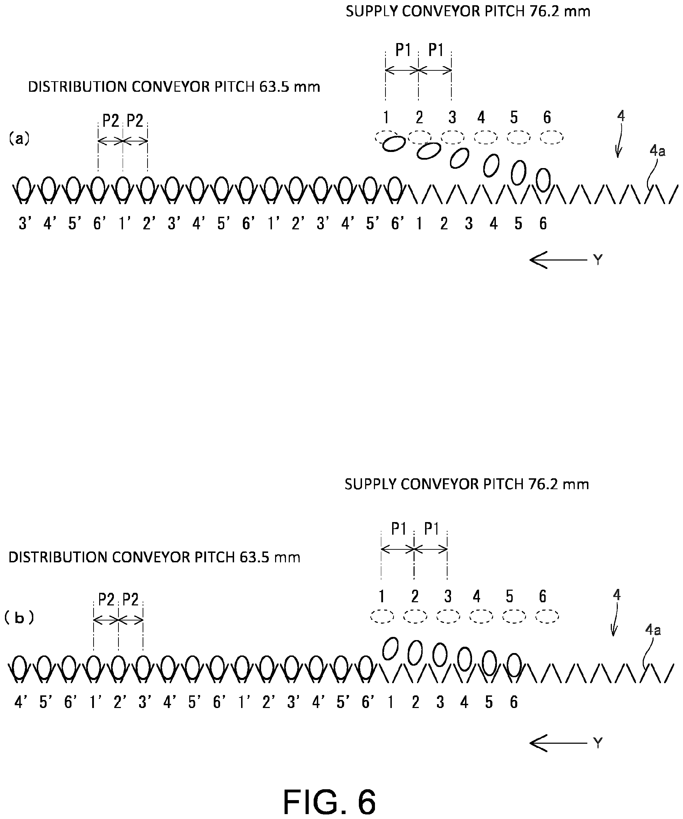

An egg transfer operation by the egg transfer device 1 will be described with reference to FIG. 6.

By individually shifting the egg release timings of the plurality of acceleration trays 7, the eggs E arranged at the first pitch P1=76.2 mm are stored in the buckets 4a arranged at the second pitch P2=63.5 mm on the distribution conveyor 4 as illustrated in FIGS. 6(a) and 6(b).

That is, in FIGS. 6(a) and 6(b), the acceleration trays 7 are first to sixth acceleration trays from the left end. FIGS. 6(a) and 6(b) are diagrams illustrating release timings of the eggs E in the first to sixth acceleration trays over time. The first to sixth acceleration trays release the eggs E at different timings in the order from the sixth acceleration tray at the right end to the first acceleration tray. As a result, as illustrated in FIG. 6(b), the eggs E in the first to sixth acceleration trays are released at different timings in order from the right side in FIG. 6(b), and are continuously transferred to the buckets 4a.

Thus, the plurality of eggs E at the first pitch P1 on the supply conveyor 3 are accurately stored in the buckets 4a at the second pitch P2 on the distribution conveyor 4 in a continuous state by the egg transfer device 1. According to the egg transfer device 1 of the present embodiment, since the reduction width of the pitch can be increased as compared with the conventional technique illustrated in FIG. 7, the speed of the distribution conveyor 4 can be suppressed to a low speed. As a result, even if the speed of the entire conveying device 2 is increased, it is possible to prevent an increase in the impact applied to the eggs when the eggs E are transferred from the supply conveyor 3 to the distribution conveyor 4, and it is possible to improve the processing capacity of the conveying device 2.

The embodiment disclosed herein is an example and is not limited thereto. For example, the plurality of rows of supply conveyors is not limited to six rows.

Further, the driving of the acceleration tray drive shaft 10 is not limited to the chain driving, and may be performed by, for example, a driving unit described in Japanese Patent Application Laid-Open No. 2011-173714 and illustrated in FIG. 7.

### <Second Embodiment>

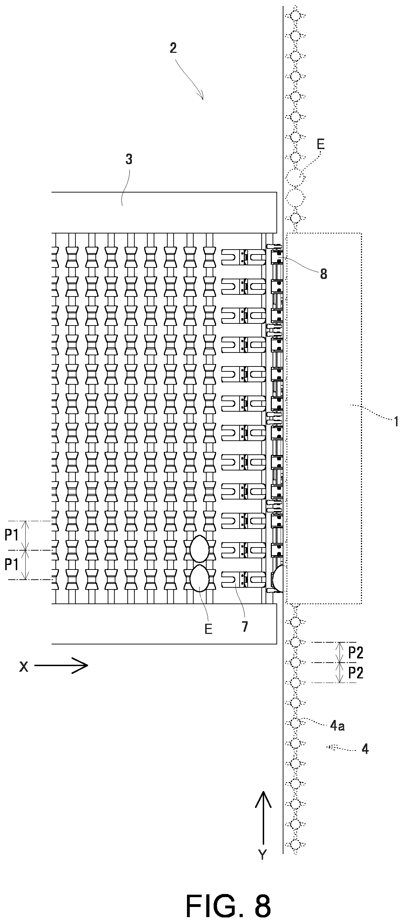

An egg transfer device according to a second embodiment of the present invention will be described with reference to the drawings. In FIGS. 8 to 18, members corresponding to the first embodiment may be denoted by different reference numerals, and members different from the first embodiment may be denoted by the same reference numerals.

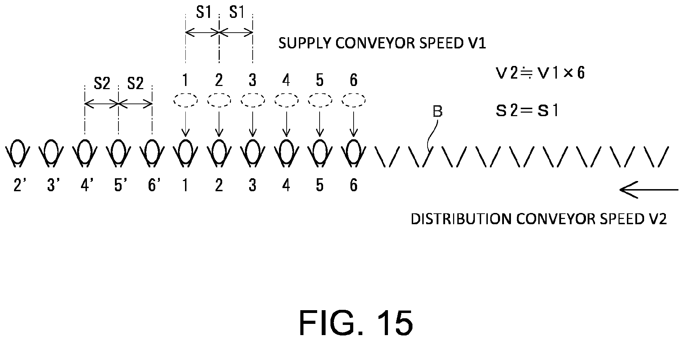

First, a conventional technique will be described with reference to the drawings. FIG. 15 corresponds to FIG. 4 of Patent Literature 1. If the arrangement pitch S1 of the eggs E supplied by the supply conveyor including the six rows and the pitch S2 between the buckets B of the single-row distribution conveyor are the same (S1=S2), the conveyance speed V2 of the distribution conveyor must be much higher (about 6 times) than the conveyance speed V1 of the supply conveyor, but if the speed of the distribution conveyor is increased, the impact when the eggs E are put into the buckets B of the distribution conveyor from the transfer device increases, and the risk that the eggs E are likely to break increases.

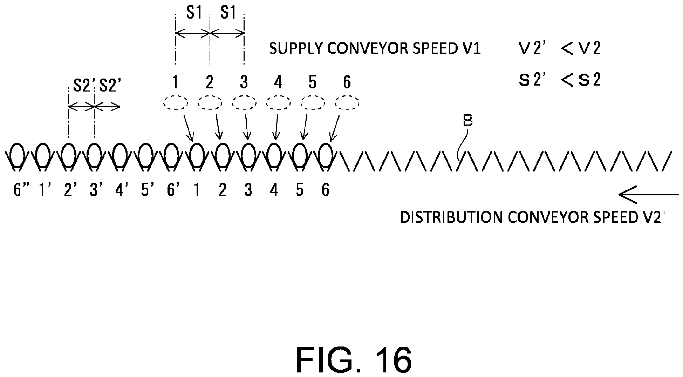

Therefore, in the conventional technique, as illustrated in FIG. 16, the conveyance speed V2' of the distribution conveyor is reduced (V2'<V2) by narrowing the pitch of the buckets B of the distribution conveyor, and the eggs E are smoothly transferred from the transfer device to the distribution conveyor.

That is, as illustrated in FIG. 4 of Patent Literature 1, in the conventional transfer device, the relationship among the egg arrangement pitch S1 of the supply conveyor, the egg arrangement pitch S2 of the distribution conveyor, and the arrangement pitch S3 of the crank drive shaft of the transfer device is set to "S1 > S3 > S2", the attachment angle between the crank drive shaft and the crank is changed so that all the six eggs from the supply conveyor can be simultaneously received at the retention positions, and after the eggs are received, the postures of the eggs are changed and the speed is accelerated to simultaneously transfer the eggs to the distribution conveyor at the release positions.

The conventional supply conveyor generally conveys six rows of eggs, and can process 40,000 eggs per hour.

In recent years, there has been a demand for improvement in processing capacity, and there has been a demand for processing of 60,000 pieces per hour, which is 1.5 times that of the conventional case. In order to satisfy this demand, it is necessary to increase the conveyance speed of both the supply conveyor and the distribution conveyor to 1.5 times.

However, when the supply conveyor operates at a speed of 1.5 times, the time for stopping on the weighing tray immediately before the transfer is shortened, so that accurate weighing cannot be performed. In addition, since it is necessary to shorten the time for moving the egg to the acceleration tray after weighing, there is a problem that the movement of the egg is not stabilized by inertia acting on the egg, and the number of eggs that fail to transfer to the acceleration tray increases.

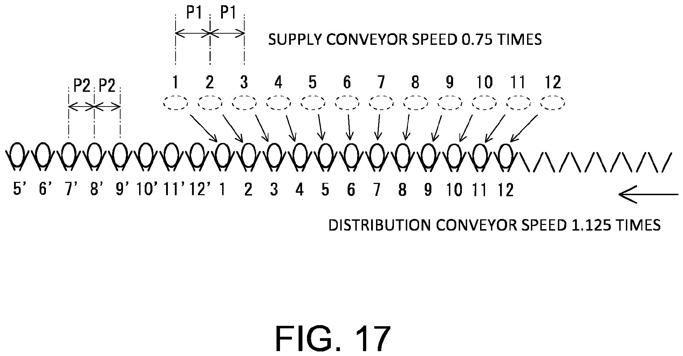

Therefore, an attempt was made to increase the number of rows in the supply conveyor from 6 rows to 12 rows to reduce the conveyance speed of the supply conveyor by 0.75 times and to process 60,000 pieces per hour. However, as illustrated in FIG. 17, when the pitch P1 of 12 rows in the supply conveyor is narrowed to the pitch P2 in a single-row distribution conveyor by using the conventional technique, the egg release angle (the inclination angle of the illustrated arrow) of the transfer device becomes large, which cannot be realized due to the structure of the transfer device.

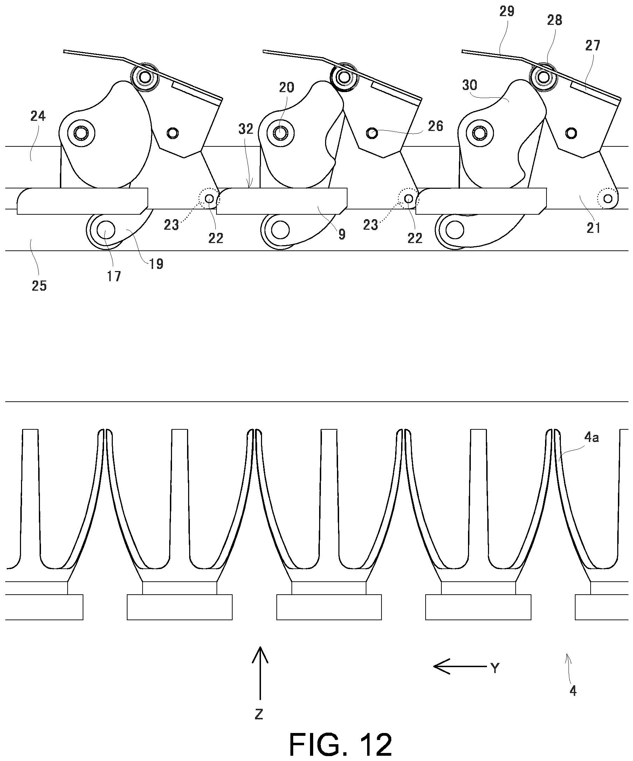

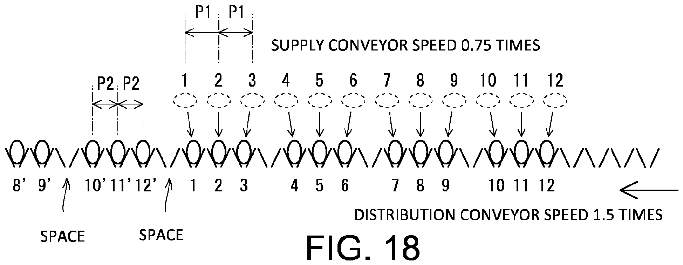

Therefore, as illustrated in FIG. 18, 12 eggs are divided into four groups each including three eggs, and for each group, an attempt is made to reduce the pitch between the eggs by reducing the change in the release angle using the conventional technique. However, when all the groups are operated "simultaneously" in the same manner as in the conventional technique, there is a new problem that a space is generated in the buckets of the distribution conveyor for each group and the conveyance efficiency of the distribution conveyor is lowered.

An object of the present invention is to provide a transfer device capable of solving the problems of the conventional technique.

In order to achieve the above object, the present invention has taken the following measures. That is, according to the present invention, in a device that transfers eggs from a multi-row supply conveyor that conveys, in an X direction, a plurality of eggs in which long axes connecting sharp ends and blunt ends of the eggs are arranged at a first pitch P1 along a Y direction to a single-row distribution conveyor that conveys, in the Y direction, the eggs in which the long axes are arranged along the Z direction at a second pitch P2 along the Y direction, in which when transferring the plurality of eggs to the distribution conveyor, the egg transfer device is configured to transfer the eggs to the distribution conveyor at different transfer timings.

It is preferable that a plurality of acceleration trays that each convert the long axis of the egg from the Y direction to the Z direction, accelerate the egg in the Y direction, and release the egg to the distribution conveyor are provided, and that the timing is an egg release timing of the acceleration tray.

It is preferable that a plurality of relay receiving trays that each receive an egg from the supply conveyor and release the egg to the acceleration tray are provided, and the timing is synchronized with an egg release timing of the relay receiving tray.

It is preferable that the plurality of relay trays and the plurality of acceleration trays are grouped, and the timings are shifted between the groups.

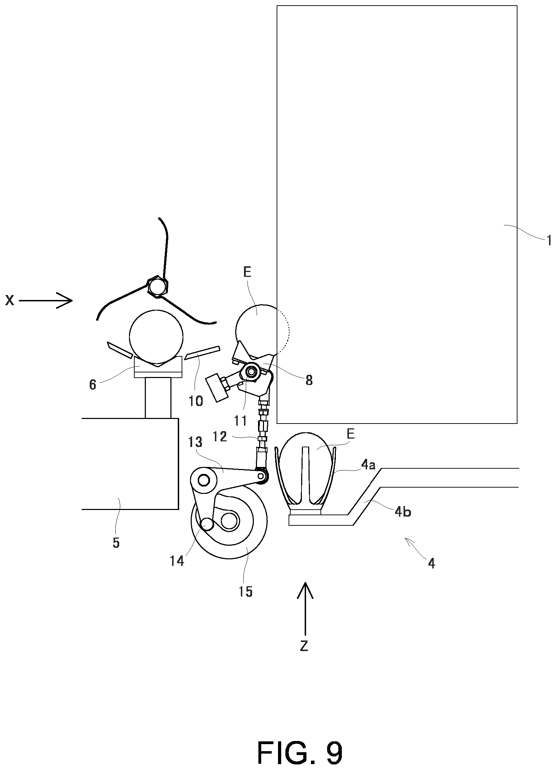

It is preferable that the number of the plurality of trays is 12, and the groups are preferably first to fourth groups divided to each include three trays. Note that the X, Y, and Z directions refer to orthogonal coordinates illustrated in FIGS. 8 and 9.

In the present invention, when the plurality of eggs are transferred to the distribution conveyor, the eggs are transferred to the distribution conveyor at different transfer timings. Therefore, as compared with the conventional technique in which the eggs are simultaneously transferred, it is possible to prevent a space from being generated in the distribution conveyor, and it is possible to prevent a decrease in the conveyance efficiency of the distribution conveyor as compared with the conventional technique.

Hereinafter, an egg transfer device according to a second embodiment of the present invention will be described with reference to the drawings.

FIG. 8 illustrates a conveying device 2 for an egg E including an egg transfer device 1 of the present invention.

The conveying device 2 for an egg includes a multi-row supply conveyor 3, a single-row distribution conveyor 4, and an egg transfer device 1 provided between the conveyors 3 and 4. A packaging device for an egg (not illustrated) is connected to the downstream side in the conveying direction Y of the distribution conveyor 4.

The supply conveyor 3 is a multi-row conveyor that conveys, in the X direction, a plurality of eggs E in which long axes connecting sharp ends and blunt ends of the eggs E are arranged at a first pitch P1 along the Y direction.

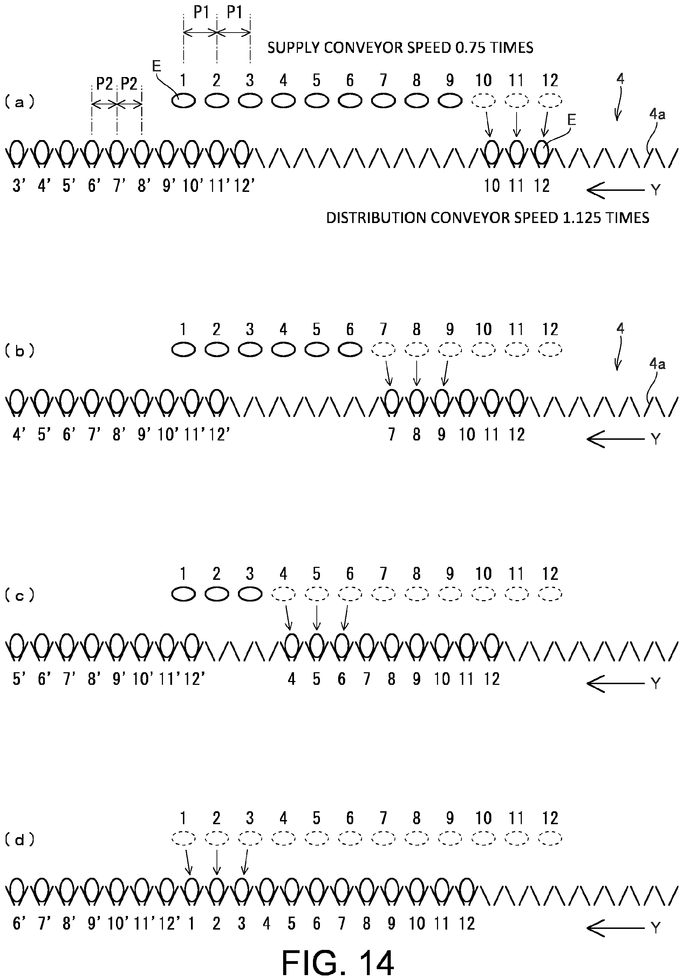

The distribution conveyor 4 is a single-row conveyor including buckets 4a in which long axes of the eggs E are arranged along the Z direction (see FIG. 9) and the eggs E are conveyed in the Y direction at a second pitch P2 (see FIG. 14) along the Y direction.

The bucket 4a is configured to open upward to receive the egg E from above, is provided at an end portion of a balance arm 4b so as to absorb the impact when receiving, and also moves in the vertical direction. The distribution conveyor 4 is connected to a conveyor that holds the eggs E of the buckets 4a from above and conveys them in a single row on the conveyance downstream side thereof, and is configured to be discharged for each size in the packaging device.

The egg transfer device 1 transfers the plurality of eggs E from the supply conveyor 3 to the single-row distribution conveyor 4. When transferring the plurality of eggs E to the distribution conveyor 4, the transfer device 1 is configured to transfer the eggs E to the buckets 4a of the distribution conveyor 4 by shifting the transfer timings, and the operation (action) thereof will be described later.

In this embodiment, the supply conveyor 3 is exemplified as a multi-row conveyor including 12 rows that conveys 12 eggs E at the first pitch P1 in an aligned manner such that the long axes thereof face the same direction. The first pitch P1 is 76.2 mm.

Weighing devices 5 are provided at the conveyance end portion of the supply conveyor 3. 12 eggs E conveyed by the supply conveyor 3 are simultaneously received by trays 6 of the weighing devices 5 at the conveyance end.

The weighing device 5 measures the weight of the egg E on the tray 6. An impeller 7 is provided above the tray 6 of the weighing device 5. After weighing, the egg E on the tray 6 is pushed out by the rotation of the impeller 7 and moved to the egg transfer device 1. The rotation speed of the impeller 7 is interlocked with the conveyance speed of the supply conveyor 3.

As illustrated in FIG. 9, the egg transfer device 1 includes relay trays 8. The relay receiving tray 8 receives the egg E pushed out by the impeller 7, and tilts to transfer the egg E to an acceleration tray 9. A guide 10 is provided between the relay tray 8 and the tray 6 of the weighing device 5. The egg E rolls on the guide 10 and is placed on the relay tray 8 with the long axis maintained in a posture along the Y-axis direction.

12 relay receiving trays 8 are provided at the first pitch P1 of 76.2 mm on rotation shafts 11 along the Y-axis direction. The 12 relay receiving trays 8 are divided into four groups of first to fourth groups each including three trays. The rotation shafts 11 of the respective groups are provided to be independently rotatable.

A rod 12 is vertically provided at an eccentric position of each of the rotation shafts 11. One end of a crank arm 13 is pivotally supported by the lower end of the rod 12. A cam follower 14 is provided at the other end of the crank arm 13. Since the intermediate point of the crank arm 13 is pivotally supported in a rotatable manner, the rod 12 is vertically movable. The cam follower 14 is engaged with a cam groove of a cam 15 that continuously rotates in one direction. The cam groove is formed in an annular shape having a convex portion in a part of the circumference. The rotation speed of the cam 15 is synchronized with the rotation of the impeller 7.

When the cam 15 makes one rotation, the crank arm 13 engaged with the cam groove makes one reciprocating rotation, the rod 12 connected to the crank arm 13 moves up and down, and the rotation shaft 11 of the relay receiving tray 8 makes reciprocating rotation, so that the relay receiving tray 8 tilts to release and drop the egg E into the acceleration tray 9 described later.

The cam groove shapes of the four cams of the four groups of the first to fourth groups are the same, but a phase difference of 30 degrees is provided between the groups so that the positions of the protrusions are different. Due to this phase difference, the timings of the release of the eggs E are shifted between the groups. That is, the first to fourth groups sequentially release three eggs E to the acceleration trays 9 with a time difference.

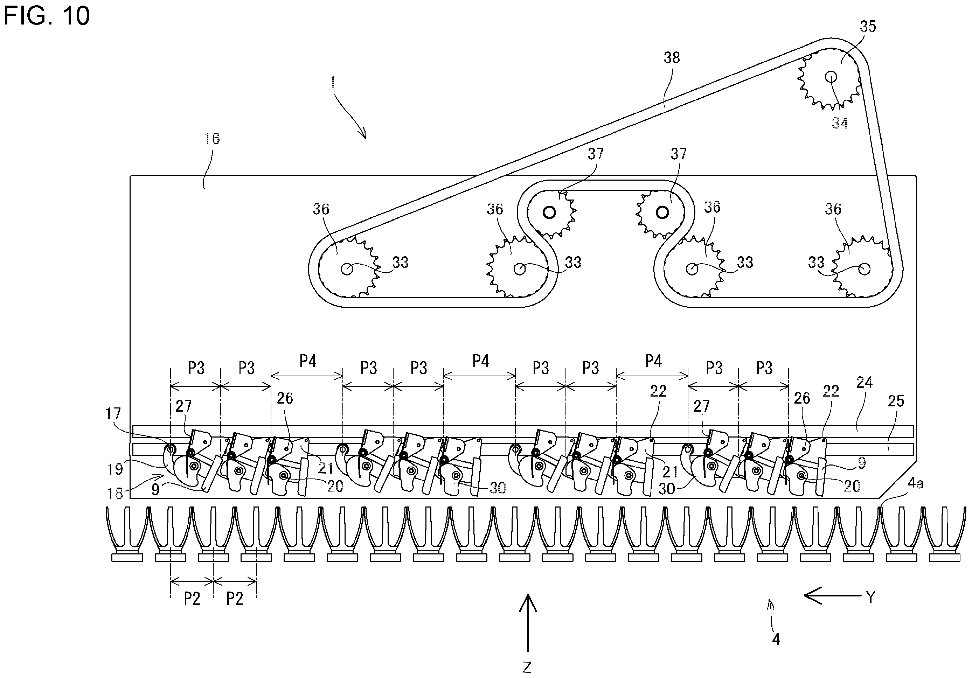

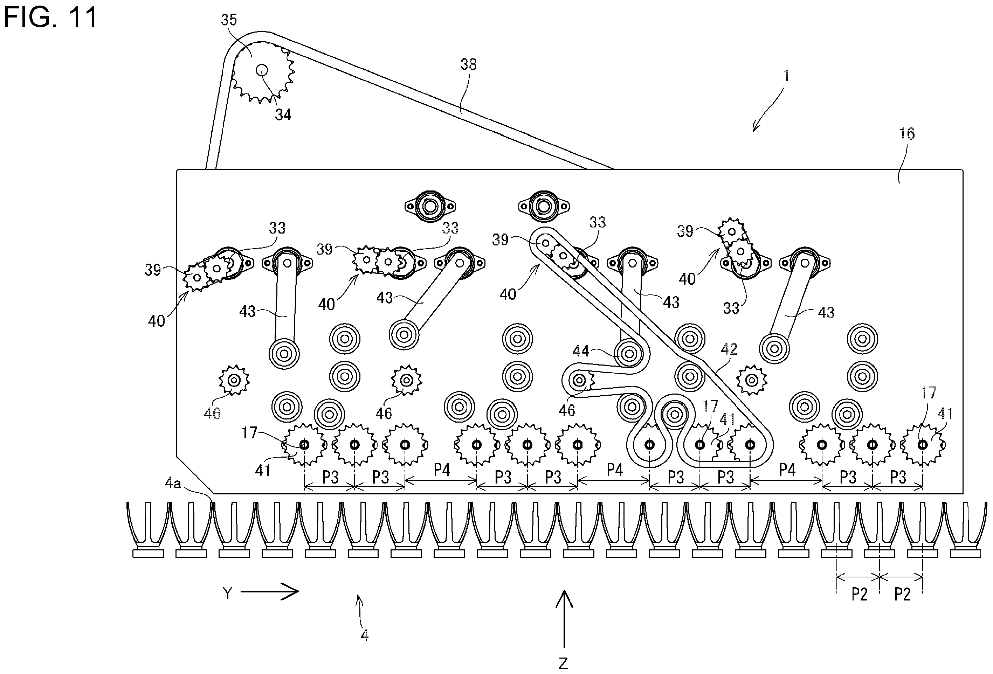

As illustrated in FIGS. 10 and 11, the egg transfer device 1 includes a machine frame 16. The machine frame 16 is provided with the acceleration trays 9. The acceleration trays 9 are provided on acceleration tray drive shafts 17 rotatably provided on the machine frame 16.

As illustrated in FIG. 10, 12 acceleration tray drive shafts 17 are provided, three acceleration tray drive shafts 17 are arranged at intervals of a pitch P3 to be divided into first to fourth groups, and the groups are arranged at intervals of a pitch P4 on the same line in the Y-axis direction. This grouping is the same as the grouping of the relay receivers 8. The pitch of the buckets 4a of the distribution conveyor 4 is P2.

In the present embodiment, P2=57.15 mm, P3=66.675 mm, and P4=95.25 mm.

The acceleration tray drive shaft 17 is provided with an acceleration mechanism 18 for the acceleration tray 9. The acceleration mechanism 18 includes a crank arm 19 fixed to an end portion of the drive shaft 17. A first pivot shaft 20 is fixed to the other end of the crank arm 19. An acceleration tray mounting bracket 21 is rotatably provided on the first pivot shaft 20. The acceleration tray 9 is fixed to the bracket 21 so as to protrude toward the supply conveyor.

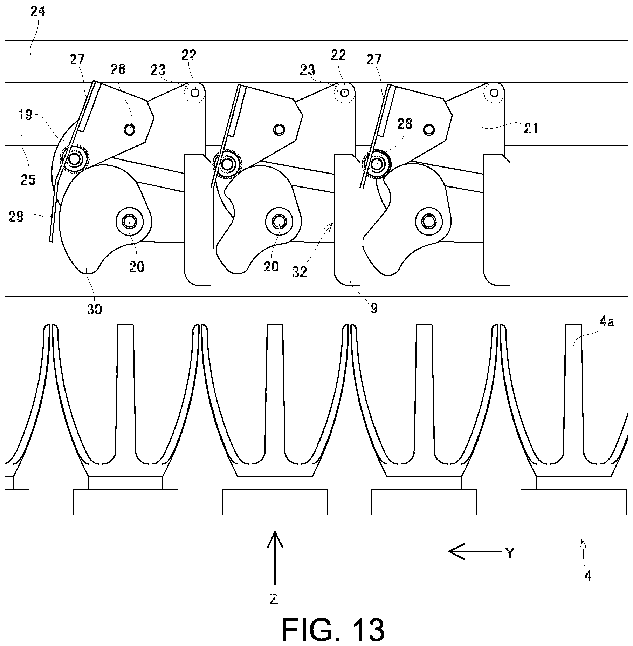

The bracket 21 is provided with a second pivot shaft 22 so as to protrude toward the machine frame 16. A roller 23 is rotatably provided on the second pivot shaft 22 (see FIGS. 12 and 13). The roller 23 is fitted in a gap between the upper rail 24 and the lower rail 25 provided in the machine frame 16, and can reciprocate along the Y direction.

The bracket 21 is provided with a third pivot shaft 26 so as to protrude toward the supply conveyor 3. An egg pressing member 27 is rotatably supported by the third pivot shaft 26 in a rotatable manner. The pressing member 27 is provided with a cam follower 28 and an egg pressing blade 29 (see FIGS. 12 and 13).

A cam 30 is fixed to the first pivot shaft 20. A biasing means is provided between the bracket 21 and the pressing member 27 so that the cam follower 28 comes into contact with the cam 30. The biasing means is formed of a tension spring (not illustrated).

The bracket 21 is provided with the first to third pivot shafts 20,22, and 26 and the acceleration tray 9.

FIGS. 12 and 13 are views illustrating postures of the acceleration trays 9 in the same group. FIG. 12 illustrates an egg receiving state, and FIG. 13 illustrates an egg releasing state.

As illustrated in FIG. 12, the roller 23 of the second pivot shaft 22 reciprocates in the horizontal direction (Y direction) at a position above the acceleration tray drive shaft 17. When the drive shaft 17 rotates in a clockwise direction, the bracket 21 pivotally supported by the first pivot shaft 20 of the crank arm 19 swings about the second pivot shaft 22. Due to the swing of the bracket 21, a placement surface 32 of the acceleration tray 9 provided in the bracket 21 changes its position from the upper side to the lower side of the drive shaft 17.

FIG. 12 is a front view illustrating egg receiving postures of the acceleration trays in the group, and the acceleration trays 9 are each in a standby state substantially above the drive shaft 17 with a placement surface 32 for receiving the egg E facing upward. The egg pressing blade 29 of the holding member 27 is held at the upper open position by the cam 30. In this state, the egg from the relay tray 8 is transferred onto the placement surface 32 of the acceleration tray 9.

Thereafter, due to the rotation of the acceleration tray drive shaft 17 in a clockwise direction, the bracket 21 pivotally supported by the first pivot shaft 20 of the crank arm 19 moves along with the horizontal movement of the second pivot shaft 22, and changes the posture of the acceleration tray 9. At this time, since the cam follower 28 of the pressing member 27 is not in contact with the cam 30, the egg pressing blade 29 presses the egg E against the placement surface 32 of the acceleration tray 9 by the biasing means.

Further, as illustrated in FIG. 13, when the drive shaft 17 rotates, the posture of the acceleration tray 9 is set such that the long axis of the egg E faces the Z-axis direction. Then, the acceleration tray 9 is accelerated in the Y direction to release the egg into the bucket 4a of the distribution conveyor 4. At this time, the egg pressing blade 29 releases the pressing of the egg E against the biasing means by the cam 30, and the egg E is released to the bucket 4a of the distribution conveyor 4 below the acceleration tray 9. After releasing the egg E, the placement surface 32 of the acceleration tray 9 returns from the state illustrated in FIG. 13 to the state illustrated in FIG. 12 by the rotation of the drive shaft 17.

Next, a drive system of the acceleration tray 9 will be described with reference to FIGS. 10 and 11.

As illustrated in FIG. 10, four group drive shafts 33 of first to fourth groups are provided in the machine frame 16. The group drive shaft 33 is driven by power from a main drive shaft 34. The main drive shaft 34 is driven in synchronization with the conveyance speed of the distribution conveyor 4. The main drive shaft 34 is provided with a main sprocket 35, and the group drive shaft 33 is provided with a group sprocket 36. The machine frame 16 is provided with an idling sprocket 37. A main chain 38 is looped around the sprockets 35,36, and 37.

In the group drive shaft 33, the crank arm 39 is fixed to the other end protruding from the machine frame 16. A dual sprocket 40 is fixed to the crank arm 39. The two sprockets 40 function as eccentric sprockets. An acceleration tray sprocket 41 is provided at an end portion of the acceleration tray drive shaft 17.

A group chain 42 is looped between the dual sprocket 40 of the crank arm 39 and the acceleration tray sprocket 41. The group chain 42 is also looped around a plurality of idling sprockets 46 provided in the machine frame 16. The group chain 42 is looped around a tension sprocket 44 provided at an end portion of the swingable arm 43 to absorb looseness of the group chain 42. The swing arm 43 is provided with a biasing means (not illustrated) that absorbs looseness of the group chain 42. Note that, in FIG. 11, the group chain 42 is illustrated as a reference for winding around only the third group from the left, but the group chain 42 is actually looped around all the first to fourth groups.

When the group drive shaft 33 rotates, the crank arm 39 rotates, and the dual sprocket 40 also rotates about the drive shaft 33. Since the dual sprocket 40 functions as an eccentric sprocket, the group chain 42 looped around the dual sprocket 40 is pulled and the traveling speed thereof is accelerated when the group chain 42 moves away from the axial center of the drive shaft 33, and is decelerated when the group chain 42 moves closer.

Therefore, the rotation speed of the acceleration tray sprocket 41 driven by the group chain 42 repeats acceleration and deceleration.

The group drive shaft 33 and the group sprocket 36 illustrated in FIG. 10 are provided in a positionally adjustable manner. By providing the phase difference between the sprocket 36 and the group drive shaft 33, the movement timings of the grouped acceleration trays 9 can be shifted. As illustrated in FIG. 11, this timing shift is achieved by phase differences in which the angles of the crank arms 39 are set to 30 degrees, 60 degrees, 90 degrees, and 120 degrees from the right end. Note that the acceleration mechanisms 18 according to the first to fourth groups in FIG. 10 illustrate a state before the phase difference is provided.

The movement of the acceleration trays will be described with reference to FIG. 14.

By dividing the 12 acceleration trays 9 into the first group to the fourth group each including three acceleration trays 9 and shifting the egg release timing of each group, as illustrated in FIGS. 5(a) to 5(d), the eggs E arranged at the first pitch P1=76.2 mm are stored in the buckets 4a of the distribution conveyors 4 at the second pitch P2=57.15 mm.

That is, FIG. 5(a) illustrates the release of the three eggs E in the first group, and after the release, the release of the three eggs E in the second group is performed at different timings as illustrated in FIG. 5(b), so that the eggs E in the first group and the second group are continuously transferred to the buckets 4a of the distribution conveyors 4. Similarly, as illustrated in FIG. 5(c), the eggs E in the third group are released at different timings, and as illustrated in FIG. 5(d), the eggs E in the fourth group are released at different timings, so that 12 eggs E are successively transferred to the distribution conveyor 4.

Thus, the 12 eggs E at the first pitch P1 on the supply conveyor 3 are continuously stored in the buckets 4a at the second pitch P2 on the distribution conveyor 4 by the egg transfer device 1, and a decrease in the conveying efficiency of the distribution conveyor can be prevented as compared with the case where the conventional technique illustrated in FIG. 18 is applied.

The embodiment disclosed herein is an example and is not limited thereto. For example, the plurality of rows in the supply conveyor is not limited to 12 rows. The grouping is not limited to four groups. The same effect is achieved by shifting the discharge timings of the acceleration trays without further grouping.

Further, the driving of the acceleration tray drive shaft 17 is not limited to the chain driving, and may be performed by, for example, a driving unit described in Japanese Patent Application Laid-Open No. 2011-173714 and illustrated in FIG. 7.

The present invention is indicated not by the scope described above but by the claims, and it is intended that all modifications within the meaning and scope equivalent to the claims are included.

### Industrial Applicability

The present invention can be used for conveying an egg.

### Reference Signs List

- 1: egg transfer device
- 2: conveying device
- 3: supply conveyor
- 4: distribution conveyor
- 4a: bucket
- 5: impeller
- 6: machine frame
- 7: acceleration tray
- 8: drive system
- 9: acceleration mechanism
- 10: acceleration tray drive shaft
- 11: first crank arm
- 12: first pivot shaft
- 13: bracket
- 14: cam
- 15: egg pressing member
- 16: second pivot shaft
- 17: third pivot shaft
- 18: roller
- 19: upper rail
- 20: lower rail
- 21: cam follower
- 22: egg pressing blade
- 23: placement surface
- 24: main drive shaft
- 25: sub-drive shaft
- 26: main sprocket
- 27: sub-sprocket
- 28: front-side swing arm
- 29: front-side tension sprocket
- 30: main chain
- 31: second crank arm
- 32: dual sprocket
- 33: acceleration tray sprocket
- 34: back-side swing arm
- 35: back-side tension sprocket
- 36: sub-chain
- 37: idling sprocket
- E: egg

## Claims

1. An egg transfer device that transfers eggs from a multi-row supply conveyor that conveys, in an X direction, a plurality of eggs in which long axes connecting sharp ends and blunt ends of the eggs are arranged at a first pitch P1 along a Y direction to a single-row distribution conveyor that conveys, in the Y direction, the eggs in which the long axes are arranged along the Z direction at a second pitch P2 along the Y direction, wherein when transferring the plurality of eggs to the distribution conveyor, the egg transfer device is configured to transfer the eggs to the distribution conveyor at different transfer timings.

2. The egg transfer device according to claim 1, further comprising a plurality of acceleration trays that each convert the long axis of the egg from the Y direction to the Z direction, accelerate the egg in the Y direction, and release the egg to the distribution conveyor, wherein the timing is an egg release timing of the acceleration tray.
